# EUROPÄISCHE PATENTANMELDUNG

(11) **EP 2 863 706 A1**
(43) Veröffentlichungstag der Anmeldung: **22.04.2015**
(21) Anmeldenummer: 14003546.0
(22) Anmeldetag: 16.10.2014
(51) Int. Cl.: H05B 3/06, H01Q 1/12, H01Q 1/52, H04B 15/02, H05B 3/84

(54) **Kontaktelement**

(30) Priorität: 18.10.2013 DE 202013009240 U
(71) Anmelder: Elektrobau Helnz Meissner GmbH & Co. KG, 33415 Verl (DE)
(72) Erfinder: Meissner, Heinz, DE - 33659 Bielefeld (DE)
(74) Vertreter: Thielking & Elbertzhagen Patentanwälte Partnerschaft mbB

(57) **Zusammenfassung**

Das Kontaktelement weist ein Trägerelement (1) und eine daran befestigte Spule (2) auf, wobei ein erstes Ende (2a) der Spule mit dem Trägerelement elektrisch leitend verbunden ist und ein zweites Ende (2b) der Spule (2) mit einer Kraftfahrzeugelektrik elektrisch verbindbar ist. Das Trägerelement (1) weist mindestens einen an einer Kraftfahrzeugscheibe (40) und/oder einem Kraftfahrzeugscheibenheizelement (50) befestigbaren Befestigungsbereich (1a, 1b) auf und ist über den mindestens einen Befestigungsbereich (1a, 1b) mit dem Kraftfahrzeugscheibenheizelement (50) elektrisch verbindbar. Das Kontaktelement weist einen parallel zur Spule (2) geschalteten Kondensator (20) auf, dessen erster Anschluss (21) mit dem ersten Ende (2a) der Spule (2) elektrisch leitend verbunden ist und dessen zweiter Anschluss (22) mit einer Kraftfahrzeugelektrik, insbesondere dem Masseanschluss, verbindbar ist.

## Beschreibung

Die Erfindung betrifft ein Kontaktelement zur Verbindung von Kraftfahrzeugscheibenheizungen mit der Kraftfahrzeugelektrik nach dem Oberbegriff des Anspruchs 1.

Üblicherweise werden die Beheizungen für Kraftfahrzeugscheiben, die insbesondere in Heckscheiben üblich sind, durch eine partielle Metallbeschichtung der Scheibenfläche, beispielsweise durch einen Silberdruck, realisiert. Dabei bildet die partielle Beschichtung der Scheibenoberfläche ein Netz aus Leiterbahnen, welche durch den Stromfluss, der entsteht, wenn an dieser eine elektrische Spannung angelegt wird, aufgeheizt werden und so die Scheibe beheizen. Um die dünne Metallbeschichtung mit der Kraftfahrzeugelektrik zu verbinden, sind spezielle Kontaktelemente notwendig, die eine elektrisch leitende Verbindung zwischen der Metallbeschichtung der Scheibe und einem üblichen elektrischen Anschlusselement, wie beispielsweise einem Kabel, ermöglichen.

Nach dem Stand der Technik werden diese Kontaktelemente mit Kabeln kontaktiert, welche zum Bordnetz oder zur als Masseanschluss dienenden Karosserie führen. Dabei ist es regelmäßig notwendig, zwischen die Heckscheibenheizung und das Bordnetz bzw. die Kraftfahrzeugelektrik oder die Karosserie eine Spule zum Zwecke der Entstörung zwischenzuschalten.

Aus DE 20 2011 109 444 U1 ist z.B. ein entsprechendes Kontaktelement bekannt, bei dem eine solche Spule direkt auf am Kontaktelement zwischen den beiden zur Verbindung mit der Kraftfahrzeugscheibenheizung und/oder der Kraftfahrzeugscheibe vorgesehenen Befestigungsbereichen angeordnet ist.

Scheibenheizungen, damit sind im Sinne der Erfindung im Wesentlichen die in oder auf die Kraftfahrzeugscheibe ein- oder aufgebrachten Leiterbahnen gemeint, werden auch als integrierte Rundfunkantenne genutzt. Aufgrund der zunehmenden Anzahl elektrischer Komponenten eines Kraftfahrzeugs kommt es dazu, dass insbesondere von diesen Komponenten Störsignale im HF-Bereich auftreten, die die Funktion einer integrierten Rundfunkantenne erheblich beeinträchtigen. Hierzu setzt man ein HF-Filter ein, indem man an geeigneter Stelle entfernt von der Scheibe ein entsprechendes Filtermodul unterbringt und von dort eine Verbindungsleitung zum Kontaktelement zieht.

In der Praxis hat sich allerdings gezeigt, dass eben diese Verbindungsleitung zum Filtermodul ihrerseits als Empfangsantenne wirkt und somit Störsignale aufnehmen kann, die den Betrieb der Rundfunkantenne wiederum stören.

Der Erfindung liegt daher die Aufgabe zugrunde, ein Kontaktelement der eingangs genannten Art anzugeben, mit welchem der störende Einfluss von HF-Signalen auf die Funktionsfähigkeit von Rundfunkantennen verringert oder gar verhindert werden kann.

Gelöst wird diese Aufgabe durch ein Kontaktelement mit den Merkmalen des Anspruchs 1. Vorteilhafte Ausführungsformen finden sich in den Unteransprüchen.

Das erfindungsgemäße Kontaktelement weist ein Trägerelement und eine daran befestigte Spule auf, wobei ein erstes Ende der Spule mit dem Trägerelement elektrisch leitend verbunden ist. Das zweite Ende der Spule ist mit einer Kraftfahrzeugelektrik elektrisch verbindbar. Dazu weist das Trägerelement mindestens einen an einer Kraftfahrzeugscheibe und/oder einem Kraftfahrzeugscheibenheizelement befestigbaren Befestigungsbereich auf. Über den mindestens einen Befestigungsbereich ist das Trägerelement mit dem Kraftfahrzeugscheibenheizelement elektrisch verbindbar. Das Kontaktelement weist einen parallel zur Spule angeordneten oder geschalteten Kondensator auf, dessen erster Anschluss mit dem ersten Ende der Spule, bei der es sich um eine Zylinderspule handeln kann, elektrisch leitend verbunden ist und dessen zweiter Anschluss mit einer Kraftfahrzeugelektrik, insbesondere dem Masseanschluss derselben, verbindbar ist. Auf diese Weise kann die Leitung zwischen Kondensator und Spule hinsichtlich ihrer Länge minimiert werden. Die Anschlusskontakte von Spule und Kondensator können direkt miteinander verbunden werden. Die Leitungslänge des so entstandenen Sperrkreises kann somit minimiert werden, so dass die "Antennen"-Wirkung von Leitungsabschnitten im Sperrkreis vermieden werden kann. Dazu ist nach einer vorteilhaften Ausführungsform zum Beispiel vorgesehen, dass das Trägerelement und das erste Ende der Spule und/oder der erste Anschluss des Kondensators durch eine Crimpverbindung, Schweißverbindung oder Lötverbindung verbunden sind.

Vorteilhaft ist, wenn die Spule, der Kondensator und das Trägerelement, zumindest teilweise, von einem Ummantelungselement umschlossen sind. Zum Einen wird das Bauteil dadurch gegen Verunreinigungen von außen geschützt, zum Anderen können die Komponenten dadurch miteinander verbunden werden. Vorzugsweise handelt es sich bei dem Ummantelungselement um einen Schrumpfschlauch, insbesondere einem klebenden Schrumpfschlauch, oder Schalen, insbesondere Halbschalen aus Kunststoff, oder eine Umspritzung aus Kunststoffmaterial.

Zwischen den Komponenten Trägerelement und/oder Spule und/oder Kondensator kann ein Isolationselement angeordnet sein.

Die Spule ist bevorzugt mit ihrer Achse parallel zur Haupterstreckungsrichtung des Trägerelements angeordnet. Der Kondensator kann insbesondere ein Kondensator in radialer oder axialer Bauart, insbesondere ein LOW-ESR-Kondensator, sein. Der LOW-ESR-Kondensator weist einen geringen Innenwiderstand auf. Folglich ist es möglich, das erfindungsgemäße Kontaktelement mit nur geringerer Wärmeentwicklung zu betreiben, was gleichbedeutend mit einer längeren Lebensdauer ist. Dabei weist der Kondensator vorzugsweise eine zylindrische Form auf. Besonders platzsparend und Leitungslänge einsparend kann dann vorgesehen sein, dass der Kondensator mit seiner Achse parallel zur Haupterstreckungsrichtung des Trägerelements angeordnet ist.

Insbesondere ist vorteilhaft, wenn der Kondensator als radialer Kondensator ausgebildet ist. Auf diese Weise können die Anschlüsse sehr kurz gehalten werden. Zudem ist es möglich, dass der zweite, nicht mit der Spule verbundene Anschluss des Kondensators mit einer Anschlussleitung verbunden ist, welche in dem Anschluss entgegengesetzter Richtung aus dem Kontaktelement herausgeführt und vom Ummantelungselement, insbesondere am Kondensator, fixiert ist. Durch diese Maßnahme kann eine Zugentlastung des zweiten Anschlusskontaktes des Kondensators erreicht werden, indem die am Anschlusskontakt des Kondensators angeschlossene Leitung, die insbesondere zur Massekontaktierung genutzt werden kann, am Kontaktelement durch die Ummantelung festgelegt wird, so dass sie sich bei Zugbelastung nicht bewegen kann. Das kann insbesondere durch Fixierung mittels eines Schrumpfschlauches geschehen.

Die Erfindung wird nachfolgend anhand der Figuren 1 bis 5 näher erläutert.
Figur 1 zeigt eine schematische Darstellung eines beispielhaften erfindungsgemäßen Kontaktelements in Draufsicht.
Figur 2 zeigt eine schematische Darstellung des Kontaktelements aus Figur 1 von unten.
Figur 3 zeigt eine schematische Darstellung Kontaktelements von einer ersten Seite.
Figur 4 zeigt eine schematische Darstellung des Kontaktelements von einer zweiten Seite.
Figur 5 zeigt eine mit dem erfindungsgemäßen Kontaktelement ausgestattete Kraftfahrzeugscheibe.

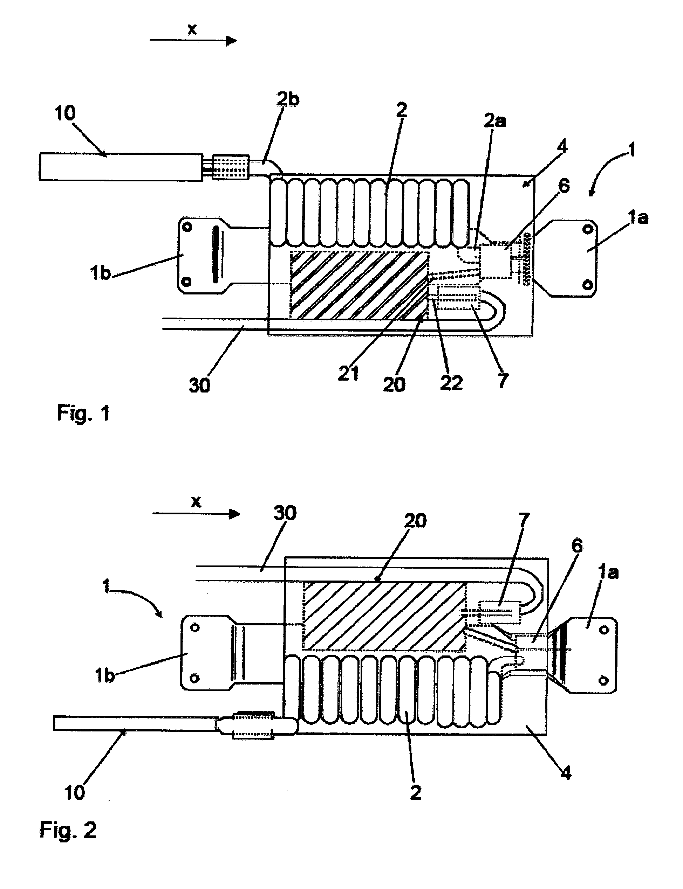

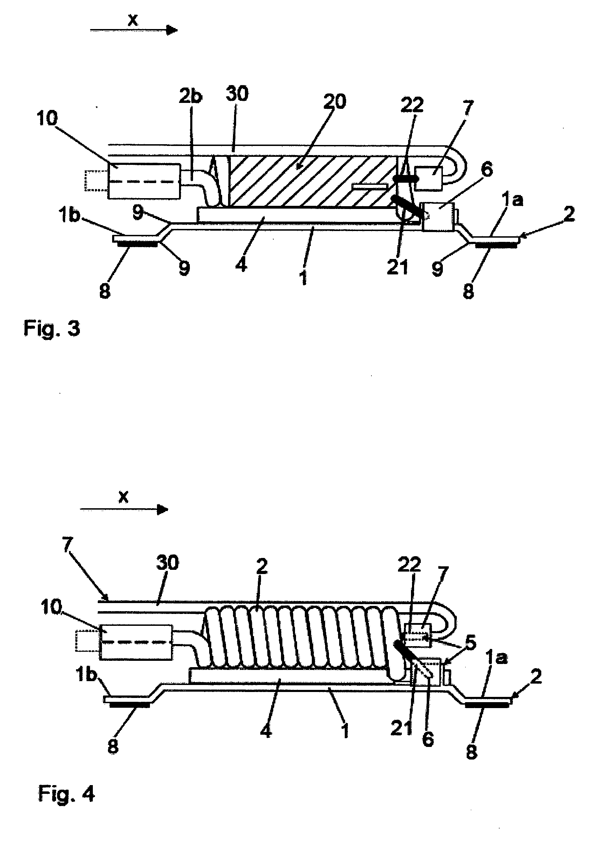

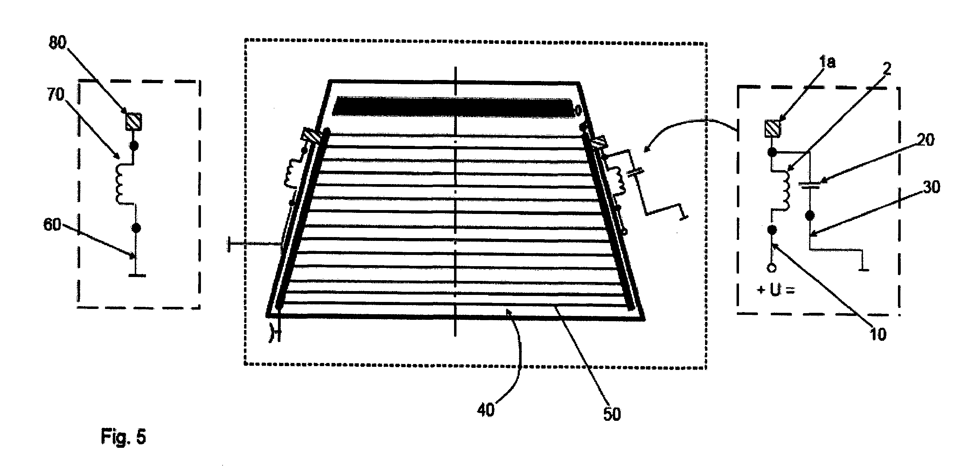

Das in den Figuren 1 bis 4 dargestellte Kontaktelement weist die beiden Befestigungsbereiche 1a und 1b auf, die mit Lötdepots 8 ausgestattet sind. Zwischen den Befestigungsbereichen 1a, 1b erstreckt sich entlang der Haupterstreckungsrichtung X des Trägerelements 1 der Bereich 1c, welcher durch die Abwinklungen 9 (vgl. Fig. 3) des Trägerelements 1 von der Kraftfahrzeugscheibe (vgl. Pos. 40 in Fig. 5) beabstandet ist. Die Spule 2 weist bevorzugt einen Kern aus Ferrit auf, grundsätzlich ist aber auch die Verwendung kernloser Spulen möglich. Die Spule 2 ist mit ihrem Ende 2a über die Verbindung 6 mit dem Trägerelement 1 elektrisch leitend verbunden. Gezeigt ist weiter ein parallel zur Spule 2 angeordneter Kondensator 20, der im gezeigten Beispiel ein Radialkondensator mit zylindrischer Form ist, welcher sich mit seiner Längsachse ebenfalls parallel zur Haupterstreckungsrichtung X erstreckt. Der eine Kontakt 21 des Kondensators 20 ist mit dem Ende 2a der Spule 2 und dem Trägerelement 1 im Bereich des Befestigungsbereiches 1a verbunden. Der andere Anschlusskontakt 22 des Kondensators 20 ist mit einer Leitung 30 verbunden, welche im Bereich des Anschlusses 22 um 180° umgebogen im Bereich des Befestigungsbereiches 1b aus dem Kontaktelement herausgeführt ist. Zur leitungssparenden Kontaktierung sind die Anschlusskontakte oder Beine des Kondensators zueinander V-förmig auseinander laufend angeordnet. Die Spule 2 wird von der Leitung 10 gespeist, welche an das elektrische Versorgungssystem eines Fahrzeugs anschließbar ist.

Zur besseren mechanischen Fixierung sind das Trägerelement 1, die Spule 2 und der Kondensator 20 von einem nicht dargestellten Ummantelungselement umgeben, bevorzugt von einem (bevorzugt klebenden) Schrumpfschlauch. Durch die Ummantelung wird insbesondere die Leitung 30 an den Kondensator gedrückt, so dass diese durch diesen Kraftschluss unbeweglich wird und für den Kondensatorkontakt 22, bzw. das Anschlussstück 7 der Leitung 30 eine Zugentlastung darstellt.

Weiter kann zwischen stromleitenden Komponenten ein Isolator oder Abstandshalteelement 4 vorgesehen sein, welches aus einem elektrisch nicht leitenden Material besteht und im gezeigten Beispiel zwischen dem Trägerelement 1 und den parallel liegenden Bauteilen Spule 2 und Kondensator 20 liegt.

Die Verbindung zwischen den Komponenten Spule 2 und Kondensator 20 untereinander und dem Trägerelement 1 kann auf verschiedene Weise erfolgen, z.B. durch Stecken, Löten oder Crimpen.

In Figur 5 ist die Befestigung und Verschaltung des Kontaktelements an einer erfindungsgemäßen Kraftfahrzeugscheibe 40 dargestellt. Auf oder in der Scheibe 40 ist eine Scheibenheizung 50 aus Leiterbahnen vorgesehen, welche an den Randbereichen zur Entstörung und/oder Bestromung Anschlusskontaktfelder aufweist. An ein solches ist das erfindungsgemäße Kontaktelement angebracht, welches wie in der rechten Schaltungsanordnung zu sehen ist, geschaltet ist und über den Befestigungsbereich 1a mit der Scheibenheizung 50 kontaktiert ist. Kondensator 20 und Spule 2 sind mit je einem Ende am Befestigungsbereich 1a angeschlossen. Das andere Spulenende ist an einer Spannungsquelle U angeschlossen. Parallel zu Spule 2 ist der Kondensator 20 geschaltet und über die Leitung 30 mit dem Massepotential verbunden. Bei der in den Figuren 1 bis 4 gezeigten geometrischen Anordnung des Kondensators 20 ist der Leitungsweg zwischen Kondensator 20 und Spule 2 minimiert, so dass Störsignale nicht mehr die Funktion der Scheibenheizung bzw. ihrer Antennenfunktion beeinträchtigen können. Der komplette Sperrkreis ist daher sehr kompakt im erfindungsgemäßen Kontaktelement konzentriert und auf der Scheibe 40 fixiert, so dass zusätzlicher Bauraum für Sperrkreiskomponenten entfällt und die Montage sich auf das Verbinden mit der Scheibe 40 beschränkt.

Auf der linken Seite ist zur Entstörung noch eine Spulenanordnung mit einer Entstörungsspule 70 vorgesehen, welche über den Anschlussbereich 80 mit der Scheibenheizung 50 und über die Leitung 60 mit der Masse verbunden ist.

## Patentansprüche

1. Kontaktelement, aufweisend ein Trägerelement (1) und eine daran befestigte Spule (2), wobei ein erstes Ende (2a) der Spule mit dem Trägerelement elektrisch leitend verbunden ist und ein zweites Ende (2b) der Spule (2) mit einer Kraftfahrzeugelektrik elektrisch verbindbar ist, wobei das Trägerelement (1) mindestens einen an einer Kraftfahrzeugscheibe (40) und/oder einem Kraftfahrzeugscheibenheizelement (50) befestigbaren Befestigungsbereich (1a, 1b) aufweist und über den mindestens einen Befestigungsbereich (1a, 1b) mit dem Kraftfahrzeugscheibenheizelement (50) elektrisch verbindbar ist,
**dadurch gekennzeichnet,**
**dass** das Kontaktelement einen parallel zur Spule (2) geschalteten Kondensator (20) aufweist, dessen erster Anschluss (21) mit dem ersten Ende (2a) der Spule (2) elektrisch leitend verbunden ist und dessen zweiter Anschluss (22) mit einer Kraftfahrzeugelektrik, insbesondere dem Masseanschluss, verbindbar ist.

2. Kontaktelement nach Anspruch 1 oder 2,
**dadurch gekennzeichnet,**
**dass** die Spule (2), der Kondensator (20) und das Trägerelement (1), zumindest teilweise, von einem Ummantelungselement (3), vorzugsweise einem Schrumpfschlauch, insbesondere einem klebenden Schrumpfschlauch, oder Schalen, insbesondere Halbschalen aus Kunststoff, umgeben oder mit Kunststoffmaterial umspritzt sind.

3. Kontaktelement nach einem der vorigen Ansprüche,
**dadurch gekennzeichnet,**
**dass** zwischen Trägerelement (1) und/oder Spule (2) und/oder Kondensator (20) ein Isolationselement (4) angeordnet ist.

4. Kontaktelement nach einem der vorigen Ansprüche,
**dadurch gekennzeichnet,**
**dass** das Trägerelement (1) und das erste Ende (2a) der Spule (2) und/oder der erste Anschluss (21) des Kondensators (20) durch eine Crimpverbindung, Schweißverbindung oder Lötverbindung verbunden sind.

5. Kontaktelement nach einem der vorigen Ansprüche,
**dadurch gekennzeichnet,**
**dass** die Spule (2) eine Zylinderspule ist.

6. Kontaktelement nach Anspruch 5,
**dadurch gekennzeichnet,**
**dass** die Spule (2) mit ihrer Achse parallel zur Haupterstreckungsrichtung (X) des Trägerelements (1) angeordnet ist.

7. Kontaktelement nach einem der vorigen Ansprüche,
**dadurch gekennzeichnet,**
**dass** der Kondensator (20) ein Kondensator in radialer oder axialer Bauart, insbesondere ein LOW-ESR-Kondensator, ist.

8. Kontaktelement nach Anspruch 7,
**dadurch gekennzeichnet,**
**dass** der Kondensator mit seiner Achse parallel zur Haupterstreckungsrichtung (X) des Trägerelements (1) angeordnet ist.

9. Kontaktelement nach Anspruch 2 und einem der Ansprüche 3 bis 8,
**dadurch gekennzeichnet,**
**dass** der Kondensator (20) ein radialer Kondensator ist, dessen zweiter Anschluss (22) mit einer Anschlussleitung (30) verbunden ist, welche in dem Anschluss entgegengesetzter Richtung aus dem Kontaktelement herausgeführt und vom Ummantelungselement (3), insbesondere am Kondensator (20) fixiert ist.

10. Kraftfahrzeugscheibe (40) mit einer Scheibenheizung (50), welche in die Scheibe (40) integriert oder auf die Scheibe (40) aufgebracht ist, wobei zum Betrieb der Scheibenheizung (50) diese mit einem an der Scheibe (40) angebrachten Kontaktelement nach einem der vorigen Ansprüche elektrisch verbunden ist.
